Europäisches Patentamt

European Patent Office

Office européen des brevets

(19)

(11) Veröffentlichungsnummer: **0 106 258**
**A2**

(12) # EUROPÄISCHE PATENTANMELDUNG

(21) Anmeldenummer: 83109889.2

(22) Anmeldetag: 04.10.83

(51) Int. Cl.³: **C 10 B 53/00**
**C 02 F 11/10**

(30) Priorität: 20.11.82 DE 3242995
09.10.82 DE 3237471

(43) Veröffentlichungstag der Anmeldung:
25.04.84 Patentblatt 84/17

(84) Benannte Vertragsstaaten:
AT BE CH FR GB IT LI LU NL SE

(71) Anmelder: Hölter, Heinz, Dipl.-Ing.
Beisenstrasse 39-41
D-4390 Gladbeck(DE)

(72) Erfinder: Hölter, Heinz, Dipl.-Ing.
Beisenstrasse 39-41
D-4390 Gladbeck(DE)

(72) Erfinder: Igelbüscher, Heinrich, Dipl.-Ing.
Marcq-en-Baroeulstrasse 60
D-4390 Gladback(DE)

(72) Erfinder: Gresch, Heinrich, Ing. grad.
Franz-Lehàr-Strasse 25
D-4600 Dortmund-Wickede(DE)

(72) Erfinder: Dewert, Heribert, Dipl.-Ing.
Bahnhofstrasse 23
D--4390 Gladbeck(DE)

(74) Vertreter: Spalthoff, Adolf, Dipl.-Ing.
Pelmanstrasse 31 P.O. Box 34 02 20
D-4300 Essen 1(DE)

(54) Verfahren zur kontinuierlichen Nutzung von Abfall, vorzugsweise Müll und Klärschlamm.

(57) Die Erfindung betrifft ein Verfahren zur kontinuierlichen Nutzung von Abfall, vorzugsweise Müll und Klärschlamm. Um eine kontinuierliche Nutzung von Abfall, insbesondere Müll, zu erreichen wird erfindungsgemäß vorgeschlagen, daß der Müll, mit einer Kohle gemischt wird, die einen hohen flüchtigen Charakter hat mit vorzugsweise über 28 % flüchtigen Anteilen und je nach Beschaffenheit des Mülls soweit zugesetzt wird, daß das Produkt aus der Entgasungsanlage mehr als 10 % Flüchtige aufweist und der Entgasungsprozeß unterhalb von 650°C durchgeführt wird. Um eine Umwandlung von schwer deponierbarem Klärschlamm auch in den Sommermonaten ohne Energieabgabe in ein zwischenlagerungsfähiges, umweltfreundliches Zwischenprodukt zu überführen wird erfindungsgemäß weiter vorgeschlagen, daß der Klärschlamm mit hochflüchtiger Kohle mit einem Anteil von mehr als 28 % Flüchtigen gemischt wird und in einem Entgasungsprozeß zur Erzeugung von einem zwischenlagerfähigen Brennstoff-Produkt (Koks) Anwendung findet.

"Verfahren zur kontinuierlichen Nutzung von Abfall, vorzugsweise Müll und Klärschlamm"

---

Es ist bekannt, daß Müll und Industrieabfallstoffe kontinuierlich anfallen und infolgedessen auch kontinuierlich
beseitigt werden sollten.

Das trifft insbesondere für den Hausmüllbereich zu.

Das Zwischenlagern von Hausmüll in den Sommermonaten zur
thermischen Nutzung in den Wintermonaten ist aus umwelttechnischen Gründen in der Regel nicht möglich, insbesondere dann, wenn die Deponie in der Nähe einer Wohnsiedlung getätigt werden müßte, da ja die Nutzung von
Energie aus Müll zur Wandlung in Fernwärme vorzugsweise
in der Nähe von Wohngebieten aus wirtschaftlichen Gründen
gegeben sein muß.

Es ist bekannt, Müll zu sortieren, zu trocknen und in
pelletförmige Formen zu pressen.

Dieses Verfahren ist sehr aufwendig und muß unter Zuführung von Fremdenergie getätigt werden, wobei insbesondere die Abluft einer Reinigung unterzogen werden
muß, um Geruchsstoffe und freigesetzte Schadstoffe
aus der Abluft umweltfreundlich auszutreiben.

Weiterhin ist bekannt, den Müll kontinuierlich, so, wie
er anfällt, auch in den Sommermonaten einer Pyrolyse-
Technik zuzuführen, um Öl und Gas zu erzeugen.

Hierzu ist eine sehr aufwendige Gasreinigung, Ölreinigung,
Abluftreinigung und Abwasserreinigung erforderlich.

Weiterhin ist es bekannt, Ballastkohle - sogenannte Abfallkohle - und auch Kohle mit Müll zu mischen und zur Pyrolysierung zu nutzen.

Auch hier soll Gas und/oder Öl gewonnen werden, und das
Rückstandsprodukt soll in deponiefähige Asche überführt
werden.

Weiterhin sind Verfahren und Vorrichtungen zur Kohle-
bzw. Abfallkohlemüllpyrolyse-Vergasung bekannt, wonach
Kohle und Müll gemischt und in einer Pyrolysestufe
pyrolysiert wird, und der anfallende Pyrokoks mit seinem
vollen Wärmeinhalt einer nachgeschalteten Kraftwerksfeuerungstechnik übergeben wird.

- 3 -

Diese genannten Verfahren haben als Basisgedanken die
Wandlung von Abfällen und/oder Abfällen mit Kohlegemisch
und kontinuierlich, so, wie der Abfall anfällt, diesen
in Gas oder in den Brennstoff überzuführen, wobei der
Brennstoff entweder in der heißen Phase oder aber abgekühlt und gemischt mit Kohle einer Verbrennungsanlage
zugeführt werden kann.

Die Schwierigkeit bei all diesen Verfahren liegt in der
kontinuierlichen Nutzung des Abfalls und Wandlung in
zwischenlagerfähigen Produktpaletten wie Gas und Öl.

Erfindungsgemäß wird daher vorgeschlagen, den Müll vorzugsweise in den Sommermonaten mit Kohle zu mischen, die
erfindungsgemäß einen hohen flüchtigen Anteil von größer
als 25 % besitzt, vorzugsweise sollte der flüchtige Anteil im Bereich - Mittelwert um 35 % liegen, um mit
geringstmöglichem Kohlezusatz (z.B. 90 % Müll und 10 %
Kohlezusatz) ein Gemisch herzustellen und dieses
bei einer Temperatur von größer 400° C, vorzugsweise je
nach Müllart im Bereich zwischen 400 und 650° C, zu entgasen, wobei das Gas nur einen geringen Anteil der eingesetzten Energie beträgt und einem z.B. Müllverbrennungskessel oder Öl- bzw. Gas- bzw. Kohleverbrennungskessel zugeführt werden kann, um in diesem Kessel einen Schwachlastbereich abzudecken.

Das Rückstandsprodukt - lagerfähiger Brennstoff - ist
bei den relativ geringen Temperaturen von unterhalb
650° C über einen Wärmetauscher prozeßwärmetechnisch,
z.B. zur Erhitzung des Einsatzgemisches, nutzbar und
besitzt einen flüchtigen Anteil von höher als 10 % -
aufgrund der Zugabe von Kohle mit hohem flüchtigen
Gehalt, so daß das umweltfreundliche Endprodukt, das
koksartig ist, in den Sommermonaten einem Zwischenlager zugeführt werden kann - ohne Beeinträchtigung
der Umwelt - und in den Wintermonaten, wie bekannt,
die Verbrennungstechnologie auf Staubbrennern in
Kohlekesseln oder Wirbelbettfeuerungen zur Herstellung
von vorzugsweise Fernwärme genutzt werden kann.

Erfindungsgemäß wird hier mit dem Gedanken Müll in den
Sommermonaten kontinuierlich bei geringster Energienutzung, d.h. bei der erfindungsgemäßen Entgasung von
unter 600° C die Kohle nur schwach entgast und behält
ihren hohen flüchtigen Anteil und hohen Kohlenstoffwert, so daß sie als Träger des Rückstandsproduktes den Ausschlag gibt sowohl für eine umweltfreundliche
Zwischenlagerungsmöglichkeit als auch für den Einsatz
in vorhandenen oder bekannten Verbrennungseinrichtungen,
ohne dabei auf teure Feststoffbrennvergasetechnologien
angewiesen zu sein.

Bei der Verwertung von Klärschlamm ergibt sich im wesentlichen die gleiche Problematik wie vorstehend für Müll
bereits erörtert.

Es ist bekannt, daß die Verwertung von Klärschlamm, insbesondere das Verbrennen, aufwendig ist und umweltfreundlich
nur unter Verwendung von teuren Gasreinigungsanlagen durchführbar ist. Die Rückstände können in der Regel aufgrund
der Schadstoffbeinhaltung nur in Sondermülldeponien abgelagert werden.

Da Klärschlamm in der Regel kontinuierlich anfällt und
daher auch möglichst so genutzt werden sollte, wird nach
einem weiteren Merkmal der Erfindung vorgeschlagen, den
Klärschlamm in den Sommermonaten bevorzugt mit Kohle und/
oder Müll zu mischen, um bei einer Temperatur von vorzugsweise unter 650° C zu entgasen und hierbei gleichzeitig
einen marktfähigen, umweltfreundlichen Koks herzustellen,

- 6 -

der in den Sommermonaten zwischengelagert werden kann,
um in den Wintermonaten nutzbringend energetisch Anwendung finden zu können.

Erfindungsgemäß wird weiter vorgeschlagen, daß die
Kohle, die verwendet wird, hochflüchtig ist, vorzugsweise über 28 % flüchtige Bestandteile enthält
und der Entgasungsprozeß so gesteuert wird, daß der
anfallende Koks noch einen hohen Anteil an flüchtigen Bestandteilen besitzt.

Hierdurch wird erreicht, daß das Rückstandsprodukt,
der sog. Koks, zündfähig ist und in bekannten Anlagen
wie Kraftwerkskesseln, Wirbelbettfeuerungen usw.
Anwendung finden kann.

Die freigesetzte Gasmenge beim Entgasungsprozeß kann
vorzugsweise zur Trocknung des Klärschlamms genutzt
werden.

Hierdurch ist die Gewähr gegeben, daß eine Umwandlung
von schwer deponierbarem Klärschlamm auch in den
Sommermonaten ohne Energieabgabe in ein zwischen-

- 7 -

lagerungsfähiges, umweltfreundliches Zwischenprodukt übergeführt wird, um in den Heizmonaten oder
in den Monaten, wo der Energiebedarf anfällt, zur
V$_e$rfügung zu stehen.

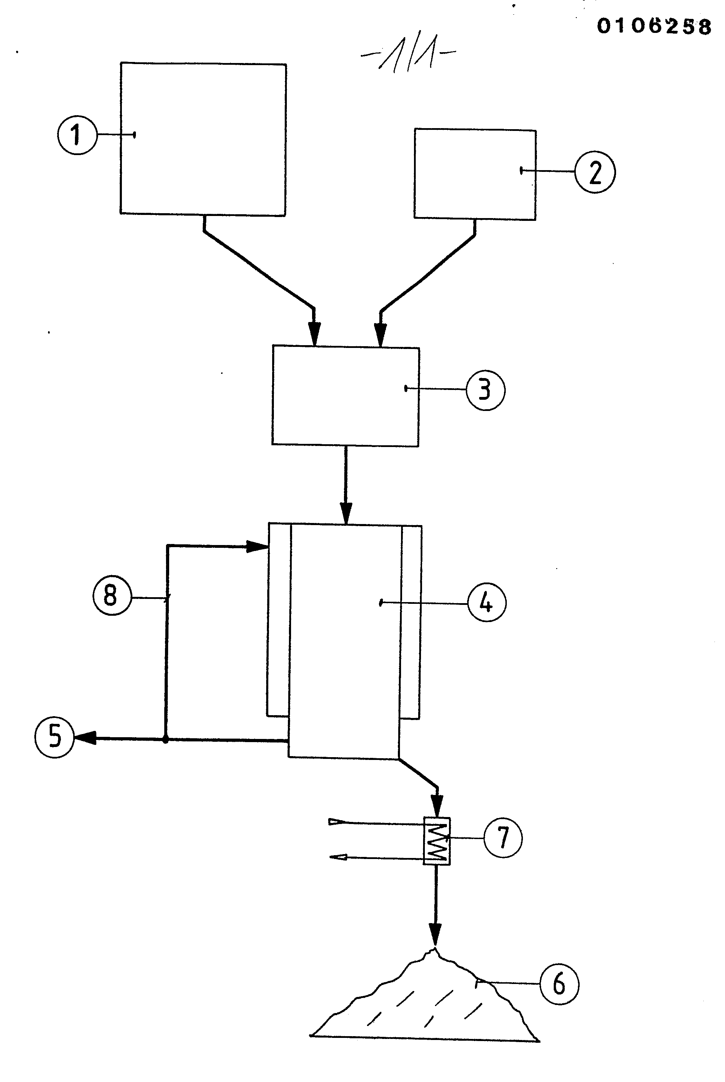

In der beiliegenden Zeichnung ist die Anlage zur
Durchführung des erfindungsgemäßen Verfahrens
dargestellt:

(1)  ist der in den Sommermonaten kontinuierlich
     zu wandelnde Müll in ein deponiefähiges, umweltfreundliches Zwischenprodukt;

(2)  ist Kohle mit hohem flüchtigen Anteil von
     vorzugsweise im Mittelwert um 35 %;

(3)  ist der Müll-Kohle-Mischer;

(4)  ist die Entgasungsvorrichtung, z.B. eine Dreh-
     trommel;

(5)  ist das durch den Entgasungsprozeß freigesetzte
     Gas, das durch Beimischungen von Additiven wie
     z.B. kalkartigen Produkten in der Entgasungstrommel weitgehendst von sauren Bestandteilen
     befreit ist und zur Nutzung des Eigenenergiebedarfs zum Betreiben des Prozesses (Außenheizung
     (8) der Entgasungstrommel) oder Nutzung des Gases (5) in danebenstehenden Müllverbrennungs- oder
Kohle- bzw. Öl- oder Gasfeuerungsanlagen dient;

(7) ist eine Wärmetauschermöglichkeit zur Abkühlung
des lagerfähigen Brennstoffes (6) dargestellt.

Die Erfindung ist auf die dargestellte und beschriebene
Ausführung nicht beschränkt, sondern es sind durchaus
Abänderungen möglich, ohne jedoch von dem erfindungsgemäßen Grundgedanken abzuweichen, den Müll, vorzugsweise Hausmüll sowie den Klärschlamm, in den Sommermonaten kontinuierlich mit geringster Energieabgabe
in ein umweltfreundliches, zwischenlagerfähiges Brennstoffprodukt zu überführen, wobei dieses einen hohen
Wert an flüchtigen Bestandteilen besitzt, um in vorhandenen Verbrennungsanlagen nutzbar gemacht zu werden.

Dipl.-Ing. Heinz Hölter

Beisenstraße 39 - 41

4390 Gladbeck

# PATENTANSPRÜCHE:

1. Verfahren zur kontinuierlichen Nutzung von Abfall – vorzugsweise Müll – und gleichzeitiger Wandlung in umweltfreundlichen, lagerfähigen Brennstoff, dadurch gekennzeichnet, daß der Müll (1) mit einer Kohle (2) gemischt wird, die einen hohen flüchtigen Charakter hat mit vorzugsweise über 28 % flüchtigen Anteilen und je nach Beschaffenheit des Mülls (1) soweit zugesetzt wird, daß das Produkt aus der Entgasungsanlage mehr als 10 % Flüchtige aufweist und der Entgasungsprozeß unterhalb von 650° C durchgeführt wird.

2. Verfahren nach Anspruch 1, insbesondere zur Verwertung von Klärschlamm, dadurch gekennzeichnet, daß der Klärschlamm mit hochflüchtiger Kohle mit einem Anteil von mehr als 28 % Flüchtigen gemischt wird und in einem Entgasungsprozeß zur Erzeugung von einem zwischenlagerfähigen Brennstoff-Produkt (Koks) Anwendung findet.

3. Verfahren nach Anspruch 2, dadurch gekennzeichnet, daß außer der Kohle auch Müll zugesetzt werden kann.

4. Verfahren nach Anspruch 2 oder 3, dadurch gekennzeichnet, daß der zugemischte Kohleanteil mehr als 10 % beträgt.

5. Verfahren nach Anspruch 2 oder einem der vorhergehenden, dadurch gekennzeichnet, daß der Entgasungsprozeß so geführt wird, daß der anfallende Koks noch einen hohen Anteil an flüchtigen Bestandteilen besitzt, zündfähig ist und in bekannten Anlagen wie Kraftwerkskesseln, Wirbelbettfeuerungen usw. als Brennstoff Einsatz finden kann.

—ΛΛ—